# EUROPÄISCHE PATENTANMELDUNG

(11) **EP 4 302 925 A1**
(43) Veröffentlichungstag der Anmeldung: **10.01.2024**
(21) Anmeldenummer: 23179060.1
(22) Anmeldetag: 13.06.2023
(51) Int. Cl.: B25B 1/18, B23Q 3/06, B23Q 3/08, B25B 1/02

(54) **ZENTRUMSPANNER**

(30) Priorität: 04.07.2022 DE 102022116645
(71) Anmelder: Ludwig Ehrhardt GmbH, 35321 Laubach (DE)
(72) Erfinder: HIPPENSTIEL, Reiner, 57080 Siegen (DE)
(74) Vertreter: v. Bezold & Partner Patentanwälte - PartG mbB

(57) **Zusammenfassung**

Die Erfindung betrifft einen Zentrumspanner (1) zum zentrischen Spannen eines Werkstücks, mit zwei gegenläufig verschiebbaren Schlitten (3, 4) mit jeweils einer Spannbacke, einer Kopplungsmechanik (9) zur gegenläufigen Kopplung der beiden Schlitten (3, 4) und einem Kolbenantrieb (5, 6, 7, 8). Die Erfindung sieht vor, dass der Arbeitszylinder (7, 8) in einem der Schlitten (3, 4) angeordnet ist und sich mit dem Schlitten (3, 4) bewegt, und dass der Antriebskolben (5, 6) relativ zu dem von dem Antriebskolben (5, 6) angetriebenen Schlitten (3, 4) verschiebbar ist.

## Beschreibung

### Technisches Gebiet der Erfindung

Die Erfindung betrifft einen Zentrumspanner zum zentrischen Spannen eines Werkstücks, insbesondere als Maschinenschraubstock in einer Werkzeugmaschine.

### Hintergrund der Erfindung

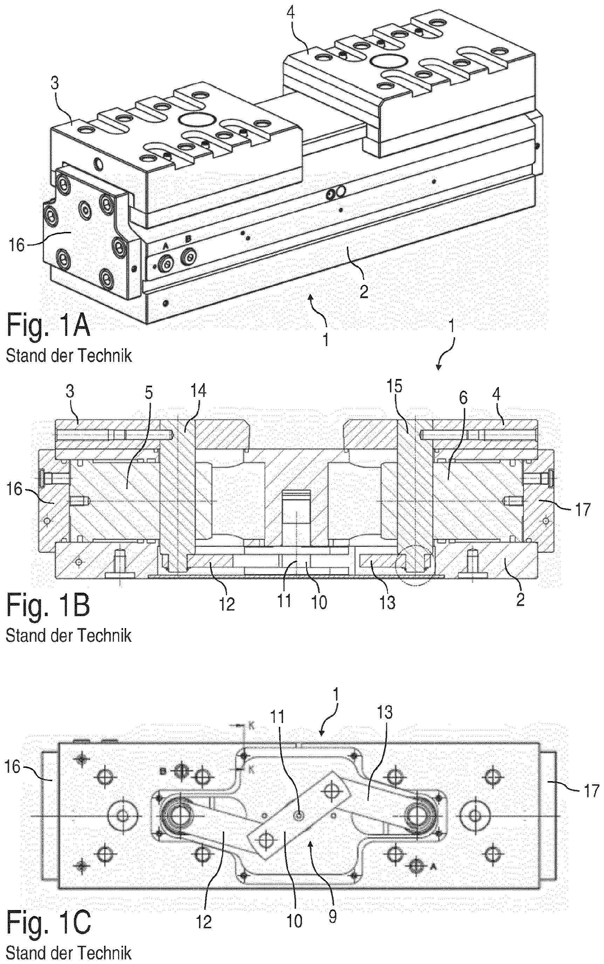

Die Figuren 1A-1C zeigen verschiedene Ansichten eines herkömmlichen Zentrumspanners 1, wie er in ähnlicher Form auch aus EP 3 271 112 B1 bekannt ist. Der Zentrumspanner 1 dient zum zentrischen Spannen eines Werkstücks in einer Werkzeugmaschine. Hierzu weist der Zentrumspanner 1 zunächst ein Gehäuse 2 auf, wobei zwei Schlitten 3, 4 in einer Linearführung in dem Gehäuse 2 gegenläufig verschiebbar sind. An ihrer Oberseite weisen die beiden Schlitten 3, 4 Spanbackenaufnahmen auf, wobei auf den Spannbackenaufnahmen Spanbacken zum Spannen des Werkstücks montiert werden können, beispielsweise durch eine Verschraubung. Zum mechanischen Antrieb der beiden Schlitten 3, 4 weist der Zentrumspanner 1 einen Kolbenantrieb auf, der aus zwei Antriebskolben 5, 6 besteht, die jeweils in einem Arbeitszylinder 7, 8 verschiebbar sind. Die Antriebskolben 5, 6 können in den Arbeitszylindern 7, 8 durch Hydrauliköl angetrieben werden, wobei die Art der Zuführung des Hydrauliköls hierbei jedoch nicht relevant ist. An der Unterseite des Zentrumspanners 1 befindet sich eine Schubkurbelgetriebe 9, das die Aufgabe hat, die gegenläufige Bewegung der Antriebskolben 5, 6 und damit auch der Schlitten 3, 4 zu synchronisieren und zu koppeln. Hierzu weist das Schubkurbelgetriebe 9 einen Schwenkhebel 10 auf, der um eine senkrechte Schwenkachse 11 schwenkbar ist. Die Enden des Schwenkhebels 10 wirken auf zwei Schubstangen 12, 13, die wiederum mit den Antriebskolben 5, 6 verbunden sind. Weiterhin ist aus Figur 1B ersichtlich, dass der Schlitten 3 durch einen Bolzen 14 mit dem Kolben 5 und auch mit der Schubstange 12 verbunden ist. In gleicher Weise ist der andere Schlitten 4 durch einen weiteren Bolzen 15 mit dem Antriebskolben 6 und der anderen Schubstange 12 verbunden. Zum einen stellen die die Bolzen 14, 15 bei einer Druckbeaufschlagung der Antriebskolben 5, 6 in den Arbeitszylindern 7, 8 sicher, dass die Antriebskolben 5, 6 die Schlitten 14, 15 mitnehmen. Zum anderen stellen die Bolzen 14, 15 bei einer Druckbeaufschlagung der Antriebskolben 5, 6 in den Arbeitszylindern 7, 8 aber auch sicher, dass das Schubkurbelgetriebe 9 die Bewegung der Schlitten 3, 4 gegenläufig synchronisiert und koppelt. Weiterhin ist aus den Zeichnungen ersichtlich, dass die Arbeitszylinder 7, 8 an den Stirnseiten des Zentrumspanners 1 durch Zylinderdeckel 16, 17 abgeschlossen sind.

Nachteilig an diesem bekannten Zentrumspanner 1 ist das unbefriedigende Verhältnis von axialer Baulänge des Zentrumspanners 1 einerseits und dem möglichen axialen Hub der Schlitten 3, 4 andererseits. Zur Erreichung eines gewünschten Hubs der Schlitten 3, 4 ist also eine bestimmte axiale Baulänge des Zentrumspanners 1 erforderlich. Es ist jedoch wünschenswert, mit einer möglichst geringen axialen Baulänge des Zentrumspanners 1 einen möglichst großen axialen Hub der Schlitten 3, 4 zu ermöglichen.

Zum technischen Hintergrund der Erfindung ist auch hinzuweisen auf DE 2 064 664 C, EP 2 546 027 B1 und DE 11 2010 003 763 B4.

Der Erfindung liegt deshalb die Aufgabe zugrunde, bei einem Zentrumspanner das Verhältnis zwischen dem erreichbaren axialen Hub der Schlitten einerseits und der dafür erforderlichen axialen Baulänge des Zentrumspanners andererseits zu verbessern.

### Beschreibung der Erfindung

Diese Aufgabe wird durch einen erfindungsgemäßen Zentrumspanner gemäß dem Hauptanspruch gelöst.

Der erfindungsgemäße Zentrumspanner dient vorzugsweise zum zentrischen Spannen eines Werkstücks, insbesondere als Maschinenschraubstock in einer Werkzeugmaschine. Die Erfindung ist jedoch nicht beschränkt auf das Spannen von Werkstücken, sondern kann auch eingesetzt werden, um andere Bauteile zu spannen.

Der erfindungsgemäße Zentrumspanner weist zunächst in Übereinstimmung mit dem eingangs beschriebenen bekannten Zentrumspanner zwei Schlitten auf, die zur Aufnahme von jeweils einer Spannbacke dienen, um das Werkstück zwischen den beiden Spanbacken zu spannen, wobei die beiden Schlitten einander gegenüberliegen und gegenläufig verschiebbar sind.

Hierbei ist zu erwähnen, dass die Spanbacken beispielsweise auf die Schlitten aufgeschraubt werden können. Es besteht jedoch alternativ auch die Möglichkeit, dass die Spanbacken einstückig an den Schlitten angeformt sind. Darüber hinaus bestehen im Rahmen der Erfindung auch andere Möglichkeiten zur mechanischen Montage der Spanbacken auf den Schlitten.

Weiterhin umfasst der erfindungsgemäße Zentrumspanner in Übereinstimmung mit dem eingangs beschriebenen bekannten Zentrumspanner eine Kopplungsmechanik, welche die beiden Schlitten mechanisch miteinander koppelt und dabei sicherstellt, dass die beiden Schlitten gegenläufige Verschiebebewegungen ausführen und dabei zentriert bleiben, so dass das Werkstück in dem Zentrumspanner zentrisch gespannt wird.

Beispielsweise kann diese Kopplungsmechanik als Schubkurbelgetriebe ausgeführt sein, wie es bei dem eingangs beschriebenen bekannten Zentrumspanner der Fall ist. Die Erfindung ist jedoch hinsichtlich der konstruktiven Gestaltung der Kopplungsmechanik nicht auf derartige Schubkurbelgetriebe beschränkt, sondern beispielsweise auch mit einem Zahnstangengetriebe als Kopplungsmechanik realisierbar.

Darüber hinaus weist auch der erfindungsgemäße Zentrumspanner in Übereinstimmung mit dem eingangs beschriebenen bekannten Zentrumspanner einen Kolbenantrieb auf, um die beiden Schlitten mechanisch anzutreiben. Der Kolbenantrieb verfügt hierbei über mindestens einen Arbeitszylinder und einen in dem Arbeitszylinder verschiebbaren Antriebskolben.

Der erfindungsgemäße Zentrumspanner zeichnet sich nun dadurch aus, dass der Arbeitszylinder in einem der Schlitten angeordnet ist und sich mit dem Schlitten bewegt, so dass der Antriebskolben relativ zu dem von dem Antriebskolben angetriebenen Schlitten verschiebbar ist. Diese Bauweise des erfindungsgemäßen Zentrumspanners ermöglicht eine Verbesserung des Verhältnisses zwischen der axialen Baulänge des Zentrumspanners einerseits und dem dabei realisierbaren axialen Hub der beiden Schlitten andererseits. Bei dem erfindungsgemäßen Zentrumspanner sind also die Schlitten fest mit den Arbeitszylindern verbunden, wohingegen bei dem eingangs beschriebenen bekannten Zentrumspanner die Antriebskolben fest mit den Schlitten verbunden sind.

In einem bevorzugten Ausführungsbeispiel der Erfindung weist der Kolbenantrieb zum Antrieb der beiden Schlitten zwei Arbeitszylinder auf, die in den beiden Schlitten angeordnet sind und sich mit den beiden Schlitten bewegen. In jedem der beiden Schlitten befindet sich hierbei also jeweils ein Arbeitszylinder. Darüber hinaus weist der Kolbenantrieb in diesem Ausführungsbeispiel zwei Antriebskolben auf, die in den beiden Antriebszylindern verschiebbar sind, so dass die Arbeitszylinder jeweils unterteilt werden in einen Innenraum an der Innenseite des Antriebskolbens und einen Außenraum an der Außenseite des Antriebskolbens. Erfindungswesentlich ist hierbei, dass die beiden Antriebskolben durch eine Kolbenstange starr miteinander verbunden sind. Darüber hinaus weist der Kolbenantrieb in diesem Ausführungsbeispiel einen Druckmittelantrieb auf, um mindestens einen der beiden Antriebskolben in dem zugehörigen Arbeitszylinder durch eine Druckbeaufschlagung des Antriebskolbens in dem Arbeitszylinder zu verschieben.

In dem bevorzugten Ausführungsbeispiel wird als Druckmittel Hydrauliköl eingesetzt, so dass der Druckmittelantrieb hydraulisch arbeitet. Es besteht jedoch grundsätzlich auch die Möglichkeit, dass als Druckmittel Druckluft eingesetzt wird, so dass der Druckmittelantrieb pneumatisch arbeitet.

In dem bevorzugten Ausführungsbeispiel der Erfindung wirkt der Druckmittelantrieb auf die beiden Antriebskolben, d.h. nicht nur auf einen der beiden Antriebskolben. Hierbei ermöglicht der Druckmittelantrieb eine Druckmittelbeaufschlagung der beiden Antriebskolben wahlweise innen oder außen, um die Antriebskolben entsprechend nach innen oder nach außen zu bewegen.

Zum Spannen des Zentrumspanners beaufschlagt der Druckmittelantrieb dann die beiden Antriebskolben auf ihrer Innenseite, d.h. in dem Innenraum, so dass die beiden Schlitten mit den darin befindlichen Arbeitszylindern aufeinander zu bewegt werden, um das jeweilige Werkstück zu spannen.

Zum Entspannen des Zentrumspanners beaufschlagt der Druckmittelantrieb dagegen die Antriebskolben jeweils auf ihrer Außenseite in dem Außenraum des Arbeitszylinders, so dass die Schlitten mit den darin befindlichen Arbeitszylindern voneinander weg bewegt werden.

Bei dem bevorzugten Ausführungsbeispiel der Erfindung leitet der Druckmittelantrieb das Druckmittel zum Entspannen des Zentrumsspanners zunächst nur in einen der beiden Außenräume der beiden Arbeitszylinder ein. Von dort gelangt das Druckmittel dann durch einen axial verlaufenden ersten Verbindungskanal in der Kolbenstange in den gegenüberliegenden Außenraum, so dass die Druckmitteleinleitung in den einen Außenraum auch zu einer Druckmittelbeaufschlagung in dem anderen Außenraum führt.

Zum Spannen des Zentrumspanners leitet der Druckmittelantrieb das Druckmittel ebenfalls zunächst nur in einen der beiden Innenräume der beiden Arbeitszylinder ein. Von dort gelangt das Druckmittel dann durch einen zweiten Verbindungskanal in der Kolbenstange in den gegenüberliegenden Innenraum, so dass die Druckmitteleinleitung in den einen Innenraum auch zu einer Druckmittelbeaufschlagung in dem anderen Innenraum führt.

Der erste Verbindungskanal in der Kolbenstange mündet deshalb vorzugsweise an seinen Enden in den gegenüberliegenden Stirnflächen der Kolbenstange in die Außenräume der Arbeitszylinder. Der zweite Verbindungskanal in der Kolbenstange mündet dagegen vorzugsweise an seinen Enden über radiale Stichbohrungen in der Mantelfläche der Kolbenstange in die Innenräume der Arbeitszylinder aus.

Zum Entspannen des Zentrumspanners ist vorzugsweise eine erste Druckmittelzuleitung vorgesehen, die vorzugsweise zunächst nur in einen der beiden Außenräume der Arbeitszylinder mündet. Zum Spannen des Zentrumspanners ist dagegen eine zweite Druckmittelzuleitung vorgesehen, die vorzugsweise zunächst nur in einen der beiden Innenräume der Arbeitszylinder mündet. Die beiden Druckmittelzuleitungen zum Spannen und Entspannen münden vorzugsweise in denselben Arbeitszylinder.

Weiterhin ist zu erwähnen, dass die beiden Druckmittelzuleitungen von Druckmittelanschlüssen ausgehen, die sich vorzugsweise in derselben Stirnfläche des Zentrumspanners befinden. Hierbei ist zu erwähnen, dass es vorteilhaft ist, wenn sich die Druckmittelanschlüsse an einer Stirnfläche des Zentrumspanners befinden und dann in die Arbeitszylinder auf der gegenüberliegenden Seite des Zentrumspanners einmünden. Dies trägt ebenfalls dazu bei, dass sich mit einer relativ geringen axialen Baulänge des Zentrumspanners ein relativ großer axialer Hub der Schlitten erreichen lässt.

Es wurde vorstehend bereits kurz erwähnt, dass der Druckmittelantrieb pneumatisch oder hydraulisch arbeiten kann. Bei dem bevorzugten Ausführungsbeispiel wird als Druckmittel jedoch Hydrauliköl eingesetzt.

Ferner ist zu erwähnen, dass die Arbeitszylinder in den beiden Schlitten außen jeweils durch einen Zylinderdeckel abgeschlossen sein können. An ihrer Innenseite können die Schlitten dagegen jeweils eine Kolbenstangendurchführung aufweisen, durch die die vorstehend erwähnte Kolbenstange hindurchgeführt ist, welche die beiden Kolbenstangen miteinander verbindet.

Weiterhin wurde vorstehend bereits erwähnt, dass die Kopplungsmechanik zur Kopplung der Schlitten als Schubkurbelgetriebe ausgebildet sein kann. Ein solches Schubkurbelgetriebe kann einen ortsfest gelagerten Schwenkhebel aufweisen, der um eine senkrechte Achse schwenkbar ist. Der Schwenkhebel kann dann mit seinen Enden auf jeweils eine Schubstange wirken, die mit den Schlitten verbunden ist und deren gegenläufige Verschiebebewegungen koppelt.

Es besteht jedoch alternativ auch die Möglichkeit, dass die Kopplungsmechanik ein Zahnstangengetriebe aufweist mit zwei Zahnstangen, die mechanisch mit den beiden Schlitten verbunden sind und in ein Zahnrad eingreifen, das die beiden Zahnstangen und damit auch die beiden Schlitten mechanisch gegenläufig koppelt.

Ein Vorteil der Erfindung besteht darin, dass der Zentrumspanner bei einer relativ geringen axialen Baulänge einen relativ großen Maximalhub der Schlitten ermöglicht. Das Verhältnis zwischen dem erreichbaren Maximalhub einerseits und der axialen Baulänge des Zentrumspanners andererseits kann auf diese Weise größer sein als 0,10, 0,11 oder sogar 0,12.

Weiterhin ist zu erwähnen, dass der Zentrumspanner eine maximale Spannkraft aufweisen kann, die mindestens 10 kN, 20 kN, 30 kN oder sogar 40 kN betragen kann.

Der Spannhub der einzelnen Schlitten kann mindestens 10 mm, 20 mm, 30 mm oder 40 mm betragen.

Ferner ist allgemein zu erwähnen, dass der Druckmittelantrieb einen Betriebsdruck aufweisen kann, der mindestens 20 bar, 40 bar, 80 bar, 120 bar oder 160 bar betragen kann.

Schließlich ist auch zu erwähnen, dass die Schlitten an ihrer Oberseite jeweils eine Spannbackenaufnahme aufweisen können, an der eine Spannbacke befestigt ist, insbesondere durch eine Verschraubung, wie eingangs bereits kurz erwähnt wurde. Die Spannbacke kann hierbei also an dem Schlitten montiert oder angeformt sein.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.

### Kurzbeschreibung der Zeichnungen

Figur 1A zeigt eine Perspektivansicht eines herkömmlichen Zentrumspanners.
Figur 1B zeigt eine Längsschnittansicht durch den herkömmlichen Zentrumspanner gemäß Figur 1A.
Figur 1C zeigt eine aufgeschnittene Unteransicht des herkömmlichen Zentrumspanners aus den Figuren 1A und 1B.
Figur 2A zeigt eine Perspektivansicht eines erfindungsgemäßen Zentrumspanners.
Figur 2B zeigt eine Schnittansicht durch den erfindungsgemäßen Zentrumspanner entlang der Schnittlinie A-A in Figur 2D.
Figur 2C zeigt eine aufgeschnittene Unteransicht des erfindungsgemäßen Zentrumspanners.
Figur 2D zeigt eine vergrößerte Detailansicht des Details Z in Figur 2B.
Figur 2E zeigt eine Schnittansicht entlang der Schnittlinie D-D in Figur 2H.
Figur 2F zeigt eine Schnittansicht entlang der Schnittlinie C-C in Figur 2H.
Figur 2G zeigt eine Aufsicht auf den erfindungsgemäßen Zentrumspanner.
Figur 2H zeigt eine Stirnansicht des erfindungsgemäßen Zentrumspanners.
Figur 2I zeigt eine vergrößerte Detailansicht des Details X in Figur 2B.
Figur 2J zeigt eine vergrößerte Detailansicht des Details W in Figur 2B.
Figur 2K zeigt eine vergrößerte Detailansicht des Details Y in Figur 2B.
Figur 2L zeigt eine vergrößerte Detailansicht des Details P in Figur 2B.
Figur 2M zeigt eine vergrößerte Detailansicht des Details U in Figur 2E.
Figur 2N zeigt eine vergrößerte Detailansicht des Details R in Figur 2E.

### Detaillierte Beschreibung der Zeichnungen

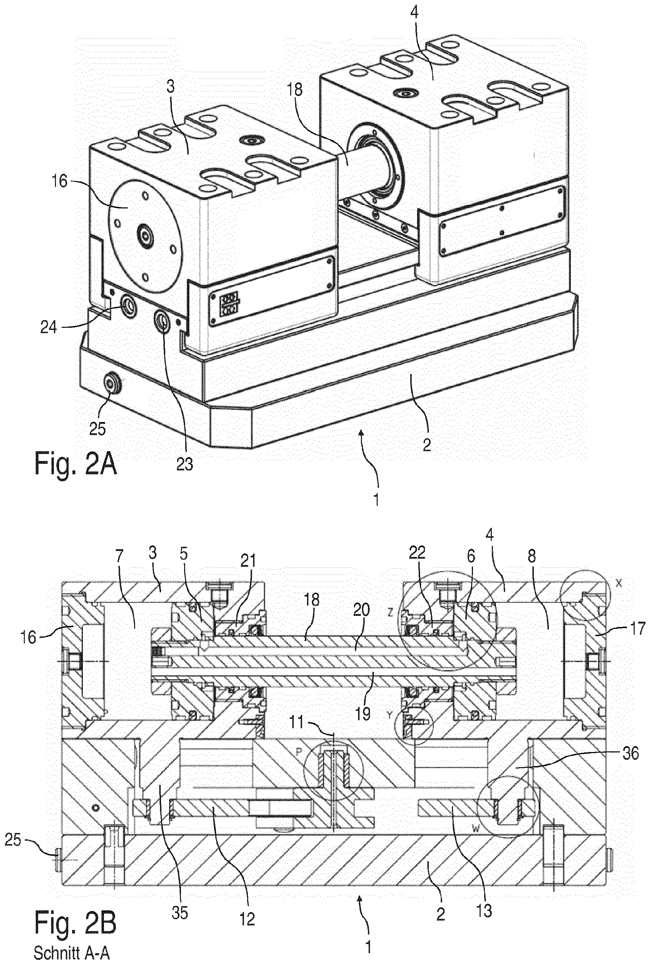

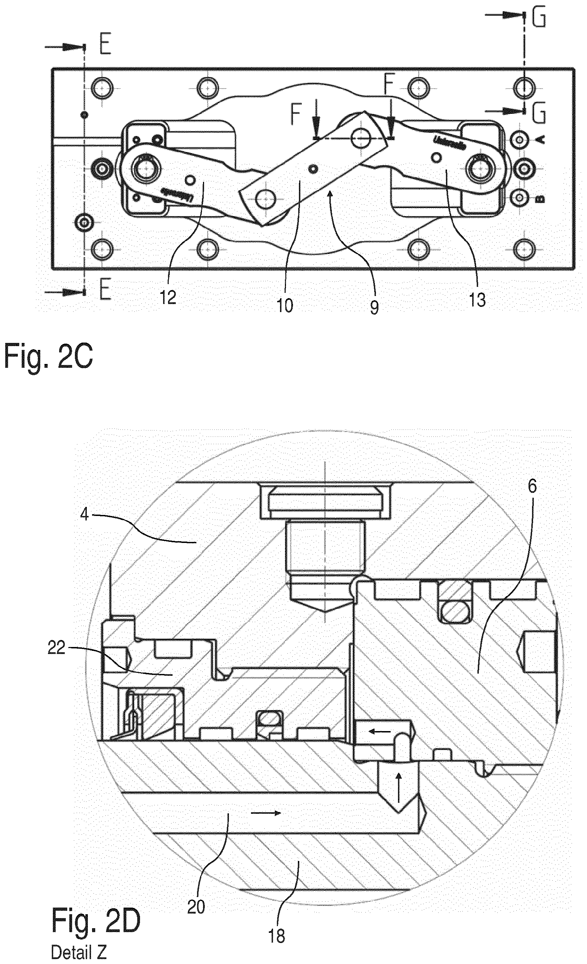

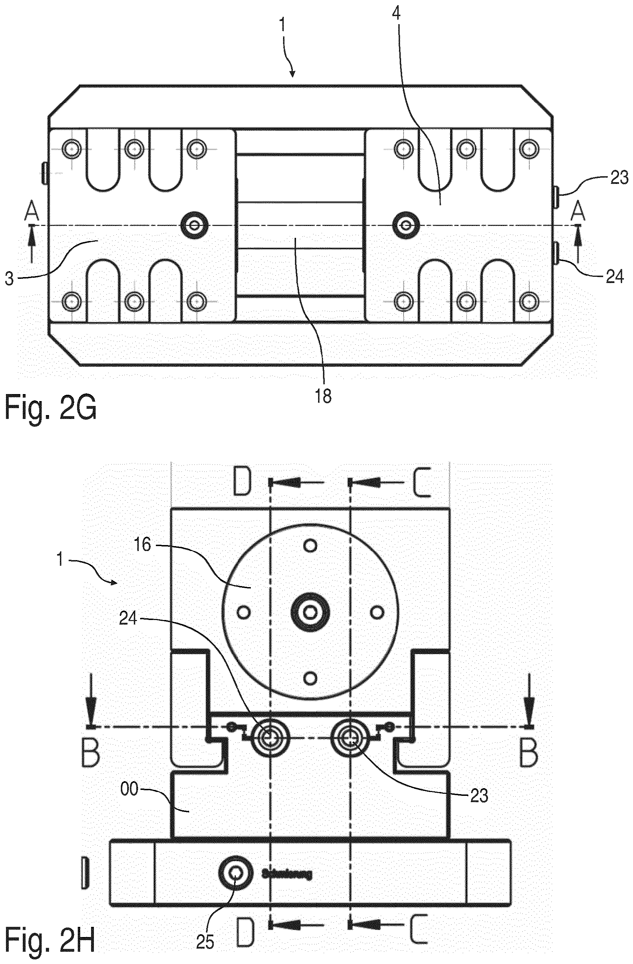

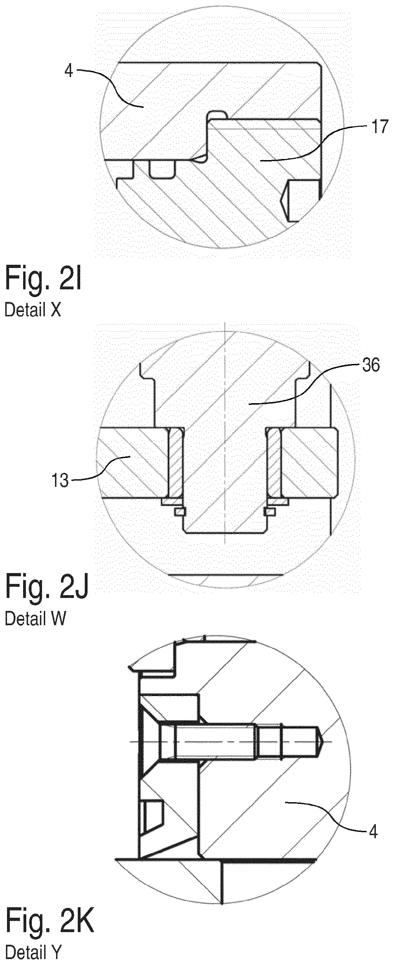

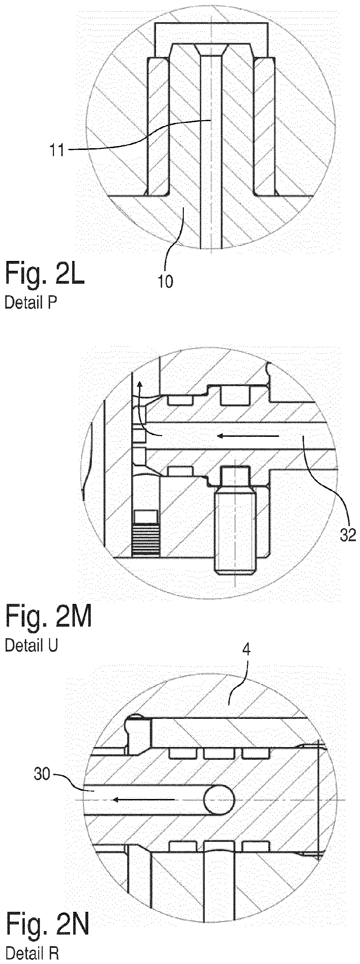

Im Folgenden wird nun das in den Figuren 2A-2N dargestellte Ausführungsbeispiel eines erfindungsgemäßen Zentrumspanners 1 beschrieben. Der erfindungsgemäße Zentrumspanner 1 stimmt teilweise mit dem eingangs beschriebenen und in den Figuren 1A-1C dargestellten herkömmlichen Zentrumspanner 1 überein, so dass zur Vermeidung von Wiederholungen auf die vorstehende Beschreibung verwiesen wird, wobei für entsprechende Einzelheiten dieselben Bezugszeichen verwendet werden.

Eine Besonderheit des erfindungsgemäßen Zentrumspanners 1 besteht zunächst darin, dass die beiden Antriebskolben 5, 6 durch eine Kolbenstange 18 starr miteinander verbunden sind und deshalb dieselbe Linearbewegung in axialer Richtung ausführen.

Eine weitere Besonderheit des erfindungsgemäßen Zentrumspanners 1 besteht darin, dass die Arbeitszylinder 7, 8 in den Schlitten 3, 4 angeordnet sind und sich mit den beiden Schlitten 3, 4 bewegen.

Die Antriebskolben 5, 6 unterteilen die beiden Arbeitszylinder 7, 8 hierbei jeweils in einen Außenraum an der Außenseite der Antriebskolben 5, 6 und jeweils einen Innenraum an der Innenseite der beiden Antriebskolben 5, 6.

Weiterhin ist zu erwähnen, dass die Kolbenstange 18 zwei axial verlaufende Verbindungskanäle 19, 20 enthält.

Der Verbindungskanal 19 in der Kolbenstange 18 mündet hierbei an seinen Enden jeweils in der Stirnfläche der Kolbenstange 18 in die Außenräume der Arbeitszylinder 7, 8. Dies bedeutet, dass eine Druckmitteleinleitung in den Außenraum des linken Arbeitszylinders 7 auch zu einer entsprechenden Druckmittelbeaufschlagung in dem Außenraum des gegenüberliegenden Arbeitszylinders 8 führt, da der Verbindungskanal 19 die beiden Außenräume der beiden Arbeitszylinder 7, 8 miteinander verbindet.

Der andere Verbindungskanal 20 in der Kolbenstange 18 verbindet dagegen die Innenräume der beiden Arbeitszylinder 7, 8. Dies bedeutet, dass eine Druckmittelbeaufschlagung in dem Innenraum des linken Arbeitszylinders 7 auch zu einer entsprechenden Druckmittelbeaufschlagung in dem Innenraum des anderen Arbeitszylinders 8 führt, da der Verbindungskanal 20 die beiden Innenräume der beiden Arbeitszylinder 7, 8 miteinander verbindet.

Aus Figur 2B ist weiterhin ersichtlich, dass die beiden Schlitten 3, 4 an ihrer Innenseite jeweils eine Kolbenstangendurchführung 21, 22 aufweisen, wobei die Kolbenstange 18 durch die beiden Kolbenstangendurchführungen 21 verschiebbar und abgedichtet hindurchgeführt ist.

An der linken Stirnseite des Zentrumspanners 1 (vgl. Fig. 2A) befindet sich zunächst ein Hydraulikanschluss 23 zur Zuführung von Hydrauliköl zum Spannen des Zentrumspanners 1.

Weiterhin befindet sich an derselben Stirnseite des Zentrumspanners 1 ein Hydraulikanschluss 24 zur Zuführung von Hydrauliköl zum Entspannen des Zentrumspanners (vgl. Fig. 2A).

Ferner befindet sich an derselben Stirnseite des Zentrumspanners 1 noch ein Schmiermittelanschluss 25 zur Zuführung von Schmiermittel, was hier jedoch nicht erfindungswesentlich ist und deshalb nur der Vollständigkeit halber erwähnt wird.

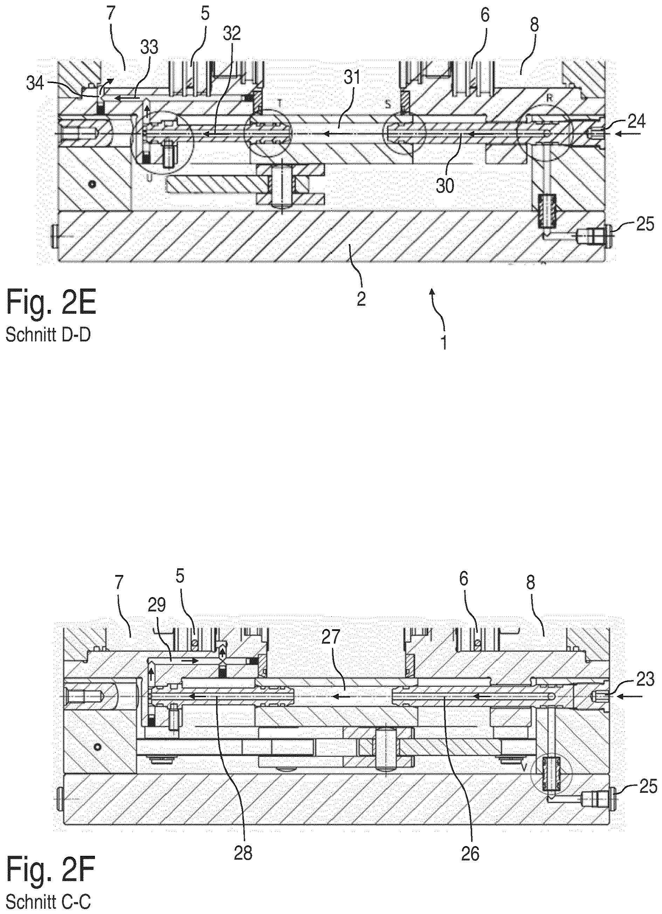

Der Hydraulikanschluss 23 zum Spannen des Zentrumspanners führt über mehrere Leitungsabschnitte 26-29 in den Innenraum des linken Arbeitszylinders 7 (vgl. Fig. 2F).

Der Hydraulikanschluss 24 zum Entspannen des Zentrumspanners mündet dagegen über mehrere Leitungsabschnitte 30-34 in den Außenraum des linken Arbeitszylinders 7 (vgl. Fig. 2E).

Bei einer Druckbeaufschlagung mit Hydrauliköl an dem Hydraulikanschluss 23 werden also die beiden Innenräume der beiden Arbeitszylinder 7, 8 mit Hydrauliköl beaufschlagt, so dass die beiden Schlitten 3, 4 aufeinander zu bewegt werden. Hierbei ist nochmals zu erwähnen, dass das Hydrauliköl von dem Hydraulikanschluss 23 zunächst nur in den Innenraum des linken Arbeitszylinders 7 gelangt. Von dort strömt das Hydrauliköl jedoch durch den Verbindungskanal 20 auch in den Innenraum des anderen Arbeitszylinders 8.

Bei einer Druckmittelbeaufschlagung mit Hydrauliköl an dem Hydraulikanschluss 24 zum Entspannen des Zentrumspanners 1 strömt das Hydrauliköl dagegen zunächst in den Außenraum des linken Arbeitszylinders 7. Von dort strömt das Hydrauliköl jedoch durch den Verbindungskanal 19 auch in den Außenraum des anderen Arbeitszylinders 8. Diese Druckbeaufschlagung führt dazu, dass die beiden Schlitten 3, 4 voneinander weg bewegt werden.

Hierbei ist zu erwähnen, dass das Schubkurbelgetriebe 9 die gegenläufigen Verschiebebewegungen der beiden Schlitten 3, 4 in gleicher Weise koppelt und synchronisiert wie bei dem eingangs beschriebenen herkömmlichen Zentrumspanner 1 gemäß den Figuren 1A-1C. Hierzu sind an der Unterseite der Schlitten 3, 4 Bolzen 35, 36 angeformt, die in die Schubstangen 12, 13 des Schubkurbelgetriebes 9 eingreifen.

Vorteilhaft an der vorstehend beschriebenen Bauweise des erfindungsgemäßen Zentrumspanners 1 ist die Tatsache, dass sich mit einer relativ geringen axialen Baulänge des Zentrumspanners 1 ein relativ großer axialer Hub der Schlitten 3, 4 realisieren lässt.

Die Erfindung ist nicht auf das vorstehende beschriebene bevorzugte Ausführungsbeispiel beschränkt. Vielmehr umfasst die Erfindung auch Varianten und Abwandlungen, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch ohne die Merkmale des Hauptanspruchs. Die Erfindung umfasst also verschiedene Erfindungsaspekte, die unabhängig voneinander Schutz genießen.

### Bezugszeichenliste

- 1: Zentrumspanner
- 2: Gehäuse des Zentrumspanners
- 3,4: Schlitten
- 5,6: Antriebskolben
- 7,8: Arbeitszylinder
- 9: Schubkurbelgetriebe
- 10: Schwenkhebel des Schubkurbelgetriebes
- 11: Schwenkachse des Schwenkhebels
- 12, 13: Schubstangen des Schubkurbelgetriebes
- 14, 15: Bolzen zur Verbindung der Schlitten, der Kolben und der Schubstangen
- 16, 17: Zylinderdeckel
- 18: Kolbenstange zur starren Verbindung der Kolben
- 19: Verbindungskanal in der Kolbenstange zur Verbindung der beiden Außenräume der Arbeitszylinder
- 20: Verbindungskanal in der Kolbenstange zur Verbindung der beiden Innenräume der Arbeitszylinder
- 21: Kolbenstangendurchführung an dem linken Arbeitszylinder
- 22: Kolbenstangendurchführung an dem rechten Arbeitszylinder
- 23: Hydraulikanschluss zum Spannen des Zentrumspanners
- 24: Hydraulikanschluss zum Entspannen des Zentrumspanners
- 25: Schmiermittelanschluss
- 26-29: Leitungsabschnitte der Hydraulikzuleitung zum Spannen des Zentrumspanners
- 30-34: Leitungsabschnitte der Hydraulikzuleitung zum Entspannen des Zentrumspanners
- 35, 36: Bolzen an der Unterseite der Schlitten

## Patentansprüche

1. Zentrumspanner (1) zum zentrischen Spannen eines Werkstücks, insbesondere als Maschinenschraubstock in einer Werkzeugmaschine, mit
a) zwei Schlitten (3, 4) zur Aufnahme von jeweils einer Spannbacke, um das Werkstück zwischen den beiden Spannbacken zu spannen, wobei die beiden Schlitten (3, 4) einander gegenüberliegen und gegenläufig verschiebbar sind,
b) einer Kopplungsmechanik (9), wobei die Kopplungsmechanik (9) die beiden Schlitten (3, 4) mechanisch miteinander koppelt und dabei sicherstellt, dass die beiden Schlitten (3, 4) gegenläufige Verschiebebewegungen ausführen und dabei zentriert bleiben, so dass das Werkstück in dem Zentrumspanner (1) zentrisch gespannt wird, und
c) einem Kolbenantrieb (5, 6, 7, 8) mit
c1) mindestens einem Arbeitszylinder (7, 8) und
c2) einem in dem Arbeitszylinder (7, 8) verschiebbaren Antriebskolben (5, 6) zum mechanischen Antrieb von einem der beiden Schlitten (3, 4),
**dadurch gekennzeichnet,**
d) **dass** der Arbeitszylinder (7, 8) in einem der Schlitten (3, 4) angeordnet ist und sich mit dem Schlitten (3, 4) bewegt, und
e) **dass** der Antriebskolben (5, 6) relativ zu dem von dem Antriebskolben (5, 6) angetriebenen Schlitten (3, 4) verschiebbar ist.

2. Zentrumspanner (1) nach Anspruch 1, **dadurch gekennzeichnet, dass** der Kolbenantrieb (5, 6, 7, 8) zum Antrieb der beiden Schlitten (3, 4) folgendes aufweist:
a) zwei Arbeitszylinder (7, 8), die in den Schlitten (3, 4) angeordnet sind und sich mit den Schlitten (3, 4) bewegen,
b) zwei Antriebskolben (5, 6), die in den beiden Arbeitszylindern (7, 8) verschiebbar sind, so dass die Arbeitszylinder (7, 8) jeweils einen Innenraum an der Innenseite des Antriebskolbens (5, 6) und einen Außenraum an der Außenseite des Antriebskolbens (5, 6) aufweisen,
c) eine Kolbenstange (18), welche die beiden Antriebskolben (5, 6) starr miteinander verbindet, und
d) einen Druckmittelantrieb (23-34) zum Antrieb von mindestens einem der beiden Antriebskolben (5, 6) in dem zugehörigen Arbeitszylinder (7, 8) durch eine Druckmittelbeaufschlagung des Antriebskolbens in dem Arbeitszylinder (7, 8) mit einem Druckmittel, insbesondere mit einem Hydrauliköl oder mit Druckluft.

3. Zentrumspanner (1) nach Anspruch 2, **dadurch gekennzeichnet,**
a) **dass** der Druckmittelantrieb (23-34) auf die beiden Antriebskolben (5, 6) wirkt, und
b) **dass** der Druckmittelantrieb (23-34) die beiden Antriebskolben (5, 6) wahlweise innen oder außen mit dem Druckmittel beaufschlagen kann, und
c) **dass** der Druckmittelantrieb (23-34) die beiden Antriebskolben (5, 6) zum Spannen des Zentrumspanners (1) auf der Innenseite der Antriebskolben (5, 6) in dem Innenraum des Arbeitszylinders (7, 8) mit dem Druckmittel beaufschlagt, so dass die Schlitten (3, 4) mit den darin befindlichen Arbeitszylindern (7, 8) aufeinander zu bewegt werden, und
d) **dass** der Druckmittelantrieb (23-34) die beiden Antriebskolben (5, 6) zum Entspannen des Zentrumspanners (1) auf der Außenseite der Antriebskolben (5, 6) in dem Außenraum des Arbeitszylinders (7, 8) mit dem Druckmittel beaufschlagt, so dass die Schlitten (3, 4) mit den darin befindlichen Arbeitszylindern (7, 8) voneinander weg bewegt werden.

4. Zentrumspanner (1) nach Anspruch 3, **dadurch gekennzeichnet,**
a) **dass** der Druckmittelantrieb (23-34) zum Entspannen des Zentrumspanners (1) das Druckmittel nur in einen der beiden Außenräume der beiden Arbeitszylinder (7, 8) einleitet,
b) **dass** die Kolbenstange (18) einen axial verlaufenden ersten Verbindungskanal (19) aufweist, der die beiden Außenräume der Arbeitszylinder (7, 8) miteinander verbindet, so dass die Druckmitteleinleitung in den einen Außenraum auch zu einer Druckmittelbeaufschlagung in dem anderen Außenraum führt.

5. Zentrumspanner (1) nach Anspruch 3 oder 4, **dadurch gekennzeichnet,**
a) **dass** der Druckmittelantrieb (23-34) zum Spannen des Zentrumspanners (1) das Druckmittel nur in einen der beiden Innenräume der beiden Arbeitszylinder (7, 8) einleitet, und
b) **dass** die Kolbenstange (18) einen axial verlaufenden zweiten Verbindungskanal (20) aufweist, der die beiden Innenräume der Arbeitszylinder (7, 8) miteinander verbindet, so dass die Druckmitteleinleitung in den einen Innenraum auch zu einer Druckmittelbeaufschlagung in dem anderen Innenraum führt.

6. Zentrumspanner (1) nach Anspruch 4 oder 5, **dadurch gekennzeichnet,**
a) **dass** der erste Verbindungskanal (19) in der Kolbenstange (18) an seinen Enden in den gegenüberliegenden Stirnflächen der Kolbenstange (18) in die Außenräume der Arbeitszylinder (7, 8) ausmündet, und/oder
b) **dass** der zweite Verbindungskanal (20) in der Kolbenstange (18) an seinen Enden über radiale Stichbohrungen in der Mantelfläche der Kolbenstange (18) in die Innenräume der Arbeitszylinder (7, 8) ausmündet.

7. Zentrumspanner (1) nach einem der Ansprüche 2 bis 6, **gekennzeichnet durch**
a) eine erste Druckmittelzuleitung (24, 30-34) zum Entspannen des Zentrumspanners (1), wobei die erste Druckmittelzuleitung (24, 30-34) nur in einen der beiden Außenräume der Arbeitszylinder (7, 8) mündet, und
b) eine zweite Druckmittelzuleitung (23, 26-29) zum Spannen des Zentrumspanners (1), wobei die zweite Druckmittelzuleitung (23, 26-29) nur in einen der beiden Innenräume der Arbeitszylinder (7, 8) mündet,
c) dass die beiden Druckmittelzuleitungen (23, 26-29, 24, 30-34) vorzugsweise in denselben Arbeitszylinder (7) münden.

8. Zentrumspanner (1) nach Anspruch 7, **dadurch gekennzeichnet,**
a) **dass** die erste Druckmittelzuleitung (24, 30-34) von einem ersten Druckmittelanschluss (24) in einer Stirnfläche an einer Seite des Zentrumspanners (1) ausgeht und in den Außenraum des Arbeitszylinders (7) auf der gegenüberliegenden Seite des Zentrumspanners (1) mündet, und/oder
b) **dass** die zweite Druckmittelzuleitung (23, 26-29) von einem zweiten Druckmittelanschluss (23) in einer Stirnfläche an einer Seite des Zentrumspanners (1) ausgeht und in den Innenraum des Arbeitszylinders (7) auf der gegenüberliegenden Seite des Zentrumspanners (1) mündet, und/oder
c) **dass** die beiden Druckmittelanschlüsse (23, 24) in derselben Stirnfläche des Zentrumspanners (1) angeordnet sind.

9. Zentrumspanner (1) nach einem der Ansprüche 2 bis 8, **dadurch gekennzeichnet,**
a) **dass** der Druckmittelantrieb (23-34) ein pneumatischer Druckmittelantrieb ist, so dass das Druckmittel Druckluft ist, oder
b) **dass** der Druckmittelantrieb (23-34) ein hydraulischer Druckmittelantrieb ist, so dass das Druckmittel Hydrauliköl ist.

10. Zentrumspanner (1) nach einem der Ansprüche 2 bis 9, **dadurch gekennzeichnet,**
a) **dass** die Arbeitszylinder (7, 8) in den Schlitten (3, 4) jeweils außen durch einen Zylinderdeckel (16, 17) abgeschlossen sind, und/oder
b) **dass** die Arbeitszylinder (7, 8) in den Schlitten (3, 4) jeweils innen eine Kolbenstangendurchführung (21, 22) aufweisen, durch die die Kolbenstange (18) hindurchgeführt ist, wobei die Kolbenstangendurchführungen (21, 22) den jeweiligen Arbeitszylinder (7, 8) abdichten.

11. Zentrumspanner (1) nach einem der vorhergehenden Ansprüche, **dadurch gekennzeichnet,**
a) **dass** die Kopplungsmechanik (9) ein Schubkurbelgetriebe (9) aufweist,
b) **dass** das Schubkurbelgetriebe (9) einen ortsfest gelagerten Schwenkhebel (10) aufweist, der um eine Schwenkachse (11) schwenkbar ist,
c) **dass** das Schubkurbelgetriebe (9) zwei Schubstangen (12, 13) aufweist,
d) **dass** die Schubstangen (12, 13) einerseits an den Enden des Schwenkhebels (10) schwenkbar angebracht sind und andererseits mit den Schlitten (3, 4) verbunden sind, und
e) **dass** das Schubkurbelgetriebe (9) eine Schwenkbewegung des Schwenkhebels (10) in die gegenläufigen Verschiebebewegungen der Schlitten (3, 4) umwandelt und dadurch eine mechanische Zwangskopplung der beiden Schlitten (3, 4) bewirkt.

12. Zentrumspanner (1) nach Anspruch 11, **dadurch gekennzeichnet,**
a) **dass** der Schwenkhebel in dem Zentrumspanner (1) um eine ortsfeste senkrechte Schwenkachse (11) schwenkbar ist,
b) **dass** die Schubstangen (12, 13) in dem Zentrumspanner (1) in einer waagerechten Ebene unterhalb der der Schlitten (3, 4) beweglich sind, und
c) **dass** die Schlitten (3, 4) jeweils durch einen Bolzen (14, 15) mit den Schubstangen (12, 13) verbunden sind, wobei die Bolzen (14, 15) von den Schlitten (3, 4) nach unten abstehen und mit ihren Enden in die Schubstangen (12, 13) eingreifen.

13. Zentrumspanner (1) nach einem der Ansprüche 1 bis 10, **dadurch gekennzeichnet, dass** die Kopplungsmechanik (9) ein Zahnstangengetriebe aufweist mit zwei Zahnstangen, die mechanisch mit den beiden Schlitten (3, 4) verbunden sind und einem Zahnrad, das in die beiden Zahnstangen eingreift und diese mechanisch gegenläufig koppelt.

14. Zentrumspanner (1) nach einem der vorhergehenden Ansprüche,
**dadurch gekennzeichnet,**
a) **dass** die Schlitten (3, 4) jeweils einen bestimmten Maximalhub aufweisen,
b) **dass** der Zentrumspanner (1) eine bestimmte axiale Baulänge hat, und
c) **dass** das Verhältnis zwischen dem Maximalhub einerseits und der axialen Baulänge andererseits größer ist 0,10 oder 0,11 oder 0,12.

15. Zentrumspanner (1) nach einem der vorhergehenden Ansprüche,
**dadurch gekennzeichnet,**
a) **dass** der Zentrumspanner (1) eine maximale Spannkraft aufweist, die mindestens 10 kN, 20 kN, 30 kN oder 40 kN beträgt, und/oder
b) **dass** die einzelnen Schlitten (3, 4) jeweils einen Spannhub aufweisen, der mindestens 10 mm, 20 mm, 30 mm oder 40 mm beträgt, und/oder
c) **dass** der Druckmittelantrieb (23, 24) einen Betriebsdruck aufweist, der mindestens 20 bar, 40 bar, 80 bar, 120 bar oder 160 bar beträgt, und/oder
d) **dass** die Schlitten (3, 4) an ihrer Oberseite jeweils eine Spannbackenaufnahme aufweisen, an der eine Spannbacke befestigt werden kann, insbesondere durch eine Verschraubung, und/oder
e) **dass** auf den Schlitten (3, 4) jeweils eine Spannbacke montiert oder angeformt ist.
